# EUROPEAN PATENT APPLICATION

(11) **EP 3 333 692 A1**
(43) Date of publication of application: **13.06.2018**
(21) Application number: 15902601.2
(22) Date of filing: 01.09.2015
(51) Int. Cl.: G06F 3/0488

(54) **METHOD AND DEVICE FOR OPERATING DISPLAY, USER INTERFACE, AND STORAGE MEDIUM**

(71) Applicant: Huawei Technologies Co., Ltd., Longgang District Shenzhen, Guangdong 518129 (CN)
(72) Inventor: ZHANG, Ning, Shenzhen Guangdong 518129 (CN); PENG, Qingquan, Shenzhen Guangdong 518129 (CN)
(74) Representative: Gill Jennings & Every LLP
(86) International application number: PCT/CN2015/088773
(87) International publication number: WO 2017/035794

(57) **Abstract**

A display operation method and apparatus, a user interface, and a storage medium are provided. The method includes: when a user interface displayed on a display is a multimedia application interface, obtaining a touch action that acts on a touch-sensitive surface, and obtaining touch information about the touch action (S301); recognizing an operation behavior according to the touch information (S302); and executing the operation behavior, and displaying a user interface for the operation behavior on the display (S303). In this way, user operation steps are simplified, and man-machine interaction experience is improved.

## Description

### TECHNICAL FIELD

Embodiments of the present invention relate to electronics technologies, and in particular, to a display operation method and apparatus, a user interface, and a storage medium.

### BACKGROUND

With development of electronics technologies, the use of portable electronic devices is increasingly extensive. By virtue of its easy operation, a display that has a touch-sensitive surface is widely applied to various portable electronic devices. Most video recorders or electronic devices with a video recording function use a display that has a touch-sensitive surface. During video recording, a user may need to draw graffiti on a video, for example, circle a part to be focused on.

In the prior art, during video recording, the user can enter a graffiti interface by invoking a graffiti function. After the graffiti interface is displayed, all function keys on the display are invalid, and graffiti is drawn on a video picture under recording by tracing the user's operation track on the display.

However, when the foregoing method is used for graffiti, if the user needs to use another function key on the display to perform an operation, such as pausing or adjusting luminance, the user needs to first exit the graffiti interface, and then perform a corresponding operation. For similar operations, the user interacts with the display by using many steps, and user experience needs to be improved.

### SUMMARY

Embodiments of the present invention provide a display operation method and apparatus, a user interface, and a storage medium, to simplify user operation steps and improve man-machine interaction experience.

According to a first aspect, an embodiment of the present invention provides a display operation method, where the method is applied to a portable electronic device, the electronic device includes a display that has a touch-sensitive surface, and the method includes:
when a user interface displayed on the display is a multimedia application interface, obtaining a touch action that acts on the touch-sensitive surface, and obtaining touch information about the touch action;
recognizing an operation behavior according to the touch information; and
executing the operation behavior, and displaying a user interface for the operation behavior on the display.

With reference to the first aspect, in a first possible implementation of the first aspect, the touch information includes: a grid capacitance value on the touch-sensitive surface that is generated by the touch action that acts on the touch-sensitive surface, a quantity of grids with a non-zero capacitance value, and an acceleration signal in a Z-axis direction.

With reference to the first possible implementation of the first aspect, in a second possible implementation of the first aspect, the recognizing an operation behavior according to the touch information includes:
recognizing the operation behavior as a first operation behavior when the grid capacitance value on the touch-sensitive surface that is generated by the touch action that acts on the touch-sensitive surface meets a first preset capacitance value range, the quantity of grids with a non-zero capacitance value is less than a preset value, and the acceleration signal in the Z-axis direction falls within a first preset acceleration range.

According to a second aspect, an embodiment of the present invention provides a portable electronic device, including:
a display, where the display has a touch-sensitive surface;
an acceleration sensor, configured to obtain an acceleration in a Z-axis direction;
a memory, configured to store an instruction; and
a processor, where the processor invokes the instruction stored in the memory to:
   when a user interface displayed on the display is a multimedia application interface, obtain a touch action that acts on the touch-sensitive surface, and obtain touch information about the touch action;
   recognize an operation behavior according to the touch information; and
   execute the operation behavior, and display a user interface for the operation behavior on the display.

With reference to the second aspect, in a first possible implementation of the second aspect, the touch information includes: a grid capacitance value on the touch-sensitive surface that is generated by the touch action that acts on the touch-sensitive surface, a quantity of grids with a non-zero capacitance value, and an acceleration signal in a Z-axis direction.

With reference to the first possible implementation of the second aspect, in a second possible implementation of the second aspect, the recognizing an operation behavior according to the touch information includes:
recognizing the operation behavior as a first operation behavior when the grid capacitance value on the touch-sensitive surface that is generated by the touch action that acts on the touch-sensitive surface meets a first preset capacitance value range, the quantity of grids with a non-zero capacitance value is less than a preset value, and the acceleration signal in the Z-axis direction falls within a first preset acceleration range.

According to a third aspect, an embodiment of the present invention provides a display operation apparatus, where the apparatus includes:
an obtaining module, configured to: when a user interface displayed on a display is a multimedia application interface, obtain a touch action that acts on a touch-sensitive surface of the display, and obtain touch information about the touch action;
a recognition module, configured to recognize an operation behavior according to the touch information; and
an execution module, configured to: execute the operation behavior, and display a user interface for the operation behavior on the display.

With reference to the third aspect, in a first possible implementation of the third aspect, the touch information includes: a grid capacitance value on the touch-sensitive surface that is generated by the touch action that acts on the touch-sensitive surface, a quantity of grids with a non-zero capacitance value, and an acceleration signal in a Z-axis direction.

With reference to the first possible implementation of the third aspect, in a second possible implementation of the third aspect, the recognition module is specifically configured to:
recognize the operation behavior as a first operation behavior when the grid capacitance value on the touch-sensitive surface that is generated by the touch action that acts on the touch-sensitive surface meets a first preset capacitance value range, the quantity of grids with a non-zero capacitance value is less than a preset value, and the acceleration signal in the Z-axis direction falls within a first preset acceleration range.

According to a fourth aspect, an embodiment of the present invention provides a user interface on a portable electronic device, where the portable electronic device includes a display, a memory, and a processor configured to execute an instruction stored in the memory, the display has a touch-sensitive surface, and the user interface includes:
a user interface, used to display a multimedia application, where
when the user interface displayed on the display is a multimedia application interface, a touch action that acts on the touch-sensitive surface is obtained, and touch information about the touch action is obtained; an operation behavior is recognized according to the touch information; and the operation behavior is executed, and a user interface for the operation behavior is displayed on the display.

According to a fifth aspect, an embodiment of the present invention provides a non-volatile computer-readable storage medium for storing one or more programs, where the one or more programs include an instruction, and when the instruction is executed by a portable electronic device including a display that has a touch-sensitive surface, the portable electronic device is enabled to execute the following events:
when a user interface displayed on the display is a multimedia application interface, obtaining a touch action that acts on the touch-sensitive surface, and obtaining touch information about the touch action; recognizing an operation behavior according to the touch information; and executing the operation behavior, and displaying a user interface for the operation behavior on the display.

The embodiments of the present invention provide the display operation methodand apparatus, the user interface, and the storage medium. The display operation method may be applied to a portable electronic device, and the portable electronic device includes a display that has a touch-sensitive surface. When a user interface displayed on the display is a multimedia application interface, a touch action that acts on the touch-sensitive surface is obtained, and touch information about the touch action is obtained; an operation behavior is recognized according to the touch information; and the operation behavior is executed, and a user interface for the operation behavior is displayed on the display. The technical solutions provided in the embodiments of the present invention simplify user operation steps and improve man-machine interaction experience.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of an internal structure of a portable electronic device according to an embodiment of the present invention;
FIG. 2 is a schematic diagram of an external structure of a portable electronic device according to an embodiment of the present invention;
FIG. 3 is a schematic flowchart of a display operation method according to an embodiment of the present invention;
FIG. 4 is a simplified schematic diagram of an internal structure of a portable electronic device according to another embodiment of the present invention;
FIG. 5 is a schematic diagram of a function structure of a display operation apparatus according to an embodiment of the present invention;
FIG. 6A is a schematic diagram of a user interface on a portable electronic device according to an embodiment of the present invention; and
FIG. 6B is a schematic diagram of another user interface on a portable electronic device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

A display operation method provided in the embodiments of the present invention may be applied to a portable electronic device, and the portable electronic device includes a display that has a touch-sensitive surface. When a user interface displayed on the display is a multimedia application interface, a touch action that acts on the touch-sensitive surface is obtained, and touch information about the touch action is obtained; an operation behavior is recognized according to the touch information; and the operation behavior is executed, and a user interface for the operation behavior is displayed on the display. Multimedia application may be video recording, video playing, text reading, or a like application scenario, so that the portable electronic device can recognize an operation behavior according to the touch information and then execute the operation behavior. In this way, user operation steps are simplified, and man-machine interaction experience is improved.

The following describes the technical solutions of the present invention in detail by using specific embodiments. The following specific embodiments may be combined with each other, and the same or similar concepts or processes may be not repeated in some embodiments.

For ease of description, in the embodiments of the present invention, a portable electronic device 100 that includes a touch-sensitive display unit is used as an example for description. It can be understood by a person skilled in the art that, the embodiments of the present invention are also applicable to other apparatuses, such as a handheld device, an in-vehicle device, a wearable device, a computing device, and various forms of user equipment (User Equipment, UE for short), mobile stations (Mobile station, MS for short), terminals (terminal), and terminal equipment (Terminal Equipment).

The electronic device 100 may support multiple applications, such as text applications (such as an email application, a blog application, and a web browsing application). The touch-sensitive display unit of the electronic device 100 may intuitively display user interfaces of the applications. Various applications can be executed by using the touch-sensitive display unit of the electronic device 100.

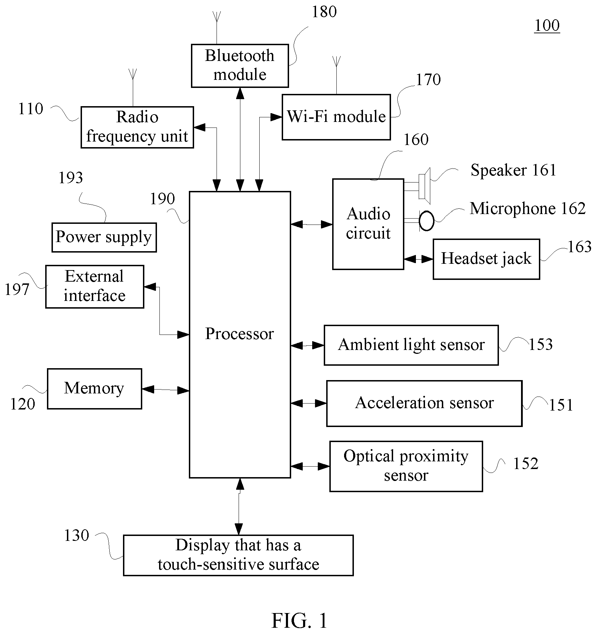

FIG. 1 is a schematic diagram of an internal structure of a portable electronic device according to an embodiment of the present invention. The electronic device 100 may include components such as a display 130 that has a touch-sensitive surface (touch-sensitive surface), an acceleration sensor 151, an optical proximity sensor 152, an ambient light sensor 153, a memory 120, a processor 190, a radio frequency unit 110, an audio circuit 160, a speaker 161, a microphone 162, a wireless fidelity (Wireless Fidelity, Wi-Fi for short) module 170, a Bluetooth module 180, a power supply 193, and an external interface 197.

A person skilled in the art may understand that, FIG. 1 is merely an example of the portable electronic device, and does not constitute any limitation to the portable electronic device. Instead, the portable electronic device may include components more or less than those shown in the figure, or combine some components, or have different components.

The display 130 that has a touch-sensitive surface is sometimes known as a "touchscreen" for convenience, or may be known as a touch-sensitive display system or a touch-sensitive display unit. The display 130 that has a touch-sensitive surface includes a touch-sensitive surface and a display screen, and can display a screen interface and receive a touch action.

The display 130 that has a touch-sensitive surface provides an input interface and an output interface between a device and a user. The display 130 that has a touch-sensitive surface can collect a touch operation on or near the display 130, for example, an operation performed by the user on or near the display 130 that has a touch-sensitive surface by using any suitable object, such as a finger, a joint, or a stylus. The display 130 that has a touch-sensitive surface may detect a touch action on the touch-sensitive display unit, a grid capacitance value on the touch-sensitive display unit, and contact coordinates; send the touch action, the grid capacitance value on the touch-sensitive display unit, and the contact coordinate information to the processor 190; and receive a command sent by the processor 190 and execute the command. The display 130 that has a touch-sensitive surface displays visual output. The visual output may include a graph, a text, an icon, a video, and any combination thereof (collectively referred to as "graphics"). In some embodiments, some visual output or all visual output may be corresponding to a user interface object.

The display 130 that has a touch-sensitive surface may use a liquid crystal display (Liquid Crystal Display, LCD for short) technology, a light emitting polymer display (LPD) technology, or a light emitting diode (Light Emitting Diode, LED for short) technology. However, another display technology may be used in another embodiment. The display 130 that has a touch-sensitive surface may use any of multiple known or to-be-developed touch sensing technologies, and another proximity sensor array or another element for determining one or more points that are in contact with the display 130 that has a touch-sensitive surface, to detect contact and any motion or interrupt. The multiple touch and sensing technologies include but are not limited to capacitive, resistive, infrared, and surface acoustic wave technologies. In an example embodiment, a projected mutual capacitance sensing technology is used.

The user may use any suitable object or accessory, such as a stylus, a finger, or a joint, to touch the display 130 that has a touch-sensitive surface. In some embodiments, a user interface is designed to work mainly with joint-based contact and gestures. In some embodiments, the device translates joint-based rough input as an accurate pointer/cursor location or a command to execute an action expected by the user.

In some embodiments, in addition to the display 130 that has a touch-sensitive surface, the device 100 may include a touchpad (not shown) used for activating or deactivating a specific function. In some embodiments, the touchpad is a touch-sensitive area of the device. The touch-sensitive area is different from the display 130 that has a touch-sensitive surface, and does not display visual output. The touchpad may be a touch-sensitive surface that is separate from the display 130 that has a touch-sensitive surface, or an extending part of a touch-sensitive surface that is formed by the display that has a touch-sensitive surface.

The acceleration sensor 151 may detect a magnitude of acceleration in each direction (generally three axes). In addition, the acceleration sensor 151 may be further configured to detect a magnitude and a direction of gravity of a terminal in a stationary state, and may be applied to an application that recognizes a mobile phone posture (for example, shift between a landscape orientation and a portrait orientation, related games, and magnetometer posture calibration), a vibration recognition-related function (such as a pedometer and a stroke), and the like. In this embodiment of the present invention, the acceleration sensor 151 is configured to obtain a gravity acceleration, in a Z-axis direction, of a touch action that the user touches the touch-sensitive display unit.

The electronic device 100 may further include one or more optical proximity sensors 152, configured to: when the electronic device 100 is close to the user (for example, when the user holds a phone close to an ear for a call), deactivate and disable a touch function of the touch-sensitive surface to prevent a misoperation of the user on the touch-sensitive display unit. The electronic device 100 may further include one or more ambient light sensors 153, configured to: when the electronic device 100 is located in a pocket of the user or in another dark area, keep the touch-sensitive display unit off, to prevent the electronic device 100 from consuming unnecessary battery power or from a misoperation when in a locked state. In some embodiments, the optical proximity sensor and the ambient light sensor may be integrated into one component or may be two independent components. Other sensors, such as a gyroscope, a barometer, a hygrometer, a thermometer, and an infrared sensor, may be further disposed in the electronic device 100, and details are not described herein. Although FIG. 1 shows the optical proximity sensor and the ambient light sensor, it can be understood that the optical proximity sensor and the ambient light sensor are not mandatory parts of the electronic device 100 and may be absolutely omitted according to a requirement without changing the essence of the present invention.

The memory 120 may be configured to store instructions and data, and the memory 120 may mainly include an instruction storage area and a data storage area. The data storage area may store a correspondence between touch information and an operation behavior, and the instruction storage area may store instructions required for an operating system and at least one function. The instructions may enable the processor 190 to perform the following method: when a user interface displayed on the display is a multimedia application interface, obtaining a touch action that acts on the touch-sensitive surface, and obtaining touch information about the touch action; recognizing an operation behavior according to the touch information; and executing the operation behavior, and displaying a user interface for the operation behavior on the display.

The processor 190 is a control center of the electronic device 100, is connected to each part of an entire mobile phone by using various interfaces and lines, and by running or executing the instructions stored in the memory 120 and invoking the data stored in the memory 120, executes various functions of the electronic device 100 and processes data, so as to monitor the entire mobile phone. Optionally, the processor 190 may include one or more processing units. Preferably, an application processor and a modem processor may be integrated into the processor 190. The application processor mainly processes an operating system, a user interface, an application, and so on, and the modem processor mainly processes wireless communication. It can be understood that the foregoing modem processor may be not integrated into the processor 190. In some embodiments, the processor and the memory may be implemented on a single chip, and in some embodiments, they may be implemented separately on independent chips. In this embodiment of the present invention, the processor 190 is further configured to invoke the instructions in the memory to: when a user interface displayed on the display is a multimedia application interface, obtain a touch action that acts on the touch-sensitive surface, and obtain touch information about the touch action; recognize an operation behavior according to the touch information; and execute the operation behavior, and display a user interface for the operation behavior.

The radio frequency (Radio Frequency, RF for short) unit 110 may be configured to receive and send information, or receive and send a signal during a call, and in particular, after receiving downlink information of a base station, send the downlink information to the processor 190 for processing; and send related uplink data to the base station. Generally, an RF circuit includes but is not limited to an antenna, at least one amplifier, a transceiver, a coupler, a low noise amplifier (Low Noise Amplifier, LNA for short), a duplexer, and the like. In addition, the radio frequency unit 110 may also communicate with a network device and another device by means of radio communication. Any communications standard or protocol may be used during radio communication, including but not limited to Global System for Mobile Communications (Global System for Mobile Communications, GSM for short), general packet radio service (General Packet Radio Service, GPRS for short), Code Division Multiple Access (Code Division Multiple Access, CDMA for short), Wideband Code Division Multiple Access (Wideband Code Division Multiple Access, WCDMA for short), Long Term Evolution (Long Term Evolution, LTE for short), email, a short message service (Short Message Service, SMS for short), and the like.

The audio circuit 160, the loudspeaker 161, and the microphone 162 may provide an audio interface between the user and the electronic device 100. The audio circuit 160 may transmit, to the loudspeaker 161, an electrical signal that is obtained by converting received audio data, and the loudspeaker 161 converts the electrical signal into an acoustic signal and outputs the acoustic signal. In addition, the microphone 162 converts a collected acoustic signal into an electrical signal; the audio circuit 160 receives the electrical signal, converts the electrical signal into audio data, and outputs the audio data to the processor 190 for processing; and processed audio data is sent to, for example, another terminal by using the radio frequency unit 110, or the audio data is output to the memory 120 for further processing. The audio circuit may further include a headset jack 163, configured to provide a connection interface between the audio circuit and a headset.

Wi-Fi is a short-range wireless transmission technology. By using the Wi-Fi module 170, the electronic device 100 may help a user to send or receive an email, browse a web page, access streaming media, and the like. The Wi-Fi module 170 provides wireless broadband Internet access for the user. Although FIG. 1 shows the Wi-Fi module 170, it can be understood that the Wi-Fi module 170 is not a mandatory part of the electronic device 100 and may be absolutely omitted according to a requirement without changing the essence of the present invention.

Bluetooth is a short-range wireless communications technology. The Bluetooth technology can effectively simplify communication between mobile communications terminal devices, such as a palmtop computer, a notebook computer, and a mobile phone, and can successfully simplify communication between the foregoing devices and the Internet (Internet). By using the Bluetooth module 180, the electronic device 100 implements faster and more efficient data transmission between the electronic device 100 and the Internet, expanding the road for wireless communication. The Bluetooth technology is an open solution that can achieve wireless voice and data transmission. Although FIG. 1 shows the Wi-Fi module 170, it can be understood that the Wi-Fi module 170 is not a mandatory part of the electronic device 100 and may be absolutely omitted according to a requirement without changing the essence of the present invention.

The electronic device 100 further includes the power supply 193 (such as a battery) that supplies power to all components. Preferably, the power supply may be logically connected to the processor 190 by using a power supply management system, to implement functions such as charging and discharging management, and power consumption management by using the power supply management system.

The electronic device 100 further includes the external interface 197. The external interface may be a standard micro USB interface or a multi-pin connector, and may be used for communication between the electronic device 100 and another apparatus, or used for connecting a charger to charge the electronic device 100.

Although not shown, the electronic device 100 may further include a camera, a camera flash, and so on, and details are not described herein.

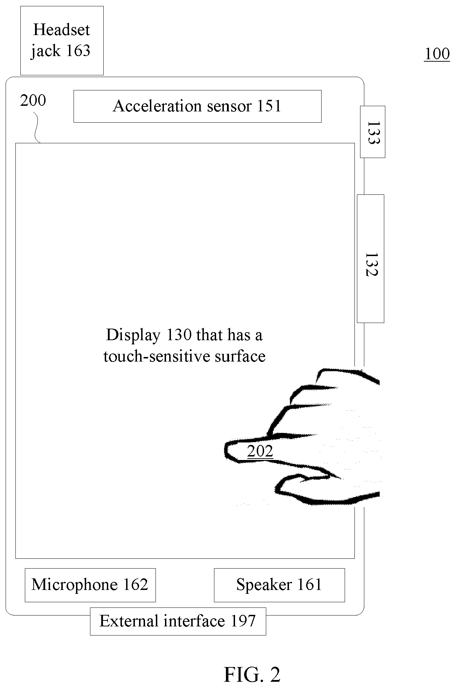

FIG. 2 is a schematic diagram of an external structure of a portable electronic device according to an embodiment of the present invention. In this embodiment of the present invention, the electronic device 100 may include a display 130 that has a touch-sensitive surface, an acceleration sensor 151, a volume control key 132, an on/off key 133, a microphone 162, a speaker 161, an external interface 197, and a headset jack 163. The display 130 that has a touch-sensitive surface may display one or more graphs in a user interface 200, and receive touch input of a user, for example, receive a touch by a finger 202 of the user. Using the display 130 that has a touch-sensitive surface as a primary input or control apparatus for operating the electronic device 100 can reduce a quantity of physical input or control apparatuses on the electronic device 100. In the embodiments of the present invention, the display that has a touch-sensitive surface may be known as a "menu button". In some other embodiments, the "menu button" may be a physical button or another physical input or control apparatus. The acceleration sensor 151 is configured to obtain a gravity acceleration, in a Z axis, of a touch action performed by the user on the display that has a touch-sensitive surface. The on/off key 133 is touched and held until a predetermined time interval is reached, to switch on or off a power supply of the electronic device 100. The on/off key 133 is touched and held, and then released before a predetermined time interval is reached, to lock the electronic device 100. In other embodiments, a microphone 162 may be further configured to receive voice input for activating some functions.

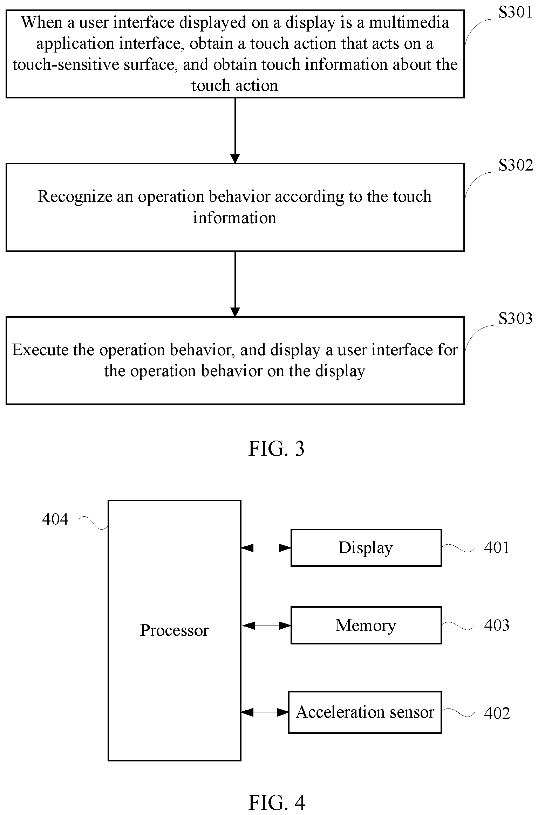

FIG. 3 is a schematic flowchart of a display operation method according to an embodiment of the present invention. As shown in FIG. 3, the display operation method provided in this embodiment of the present invention is applied to a portable electronic device. The electronic device includes a display that has a touch-sensitive surface. The display operation method provided in this embodiment of the present invention includes the following steps.

S301: When a user interface displayed on the display is a multimedia application interface, obtain a touch action that acts on a touch-sensitive surface, and obtain touch information about the touch action.

For example, the multimedia application interface may be an application interface that displays video recording, video playing, a web page, a blog, a text, and so on.

The display that has a touch-sensitive surface may obtain a touch action of a user and touch information by using multiple touch sensing technologies, including but not limited to capacitive, resistive, infrared, and surface acoustic wave technologies. The touch action may be tapping, moving, flicking, or the like.

In one implementation, the touch information may include: a grid capacitance value on the touch-sensitive surface that is generated by the touch action that acts on the touch-sensitive surface, a quantity of grids with a non-zero capacitance value, and an acceleration signal in a Z-axis direction.

S302: Recognize an operation behavior according to the touch information.

Different touch information may be corresponding to different operation behaviors. A correspondence between touch information and an operation behavior may be predefined in the portable electronic device. The correspondence between touch information and an operation behavior may be pre-stored in a memory (for example, the memory 120 in FIG. 1).

Optionally, the operation behavior in this embodiment of the present invention may include a first operation behavior or a second operation behavior. The first operation behavior may be a graffiti behavior. The second operation behavior may be a function selection behavior. In the graffiti behavior, a user may annotate or circle content in the multimedia application interface displayed on the display. In the function selection behavior, the user may trigger a corresponding function at a user's touch location of the user on the display. In video playing, for example, the function selection behavior may include but is not limited to pausing, playing, stopping, and luminance adjusting. After obtaining the touch information about the touch action, the portable electronic device may recognize, according to the preset correspondence between touch information and an operation behavior, an operation behavior corresponding to the obtained touch information. For example, the correspondence between touch information and an operation behavior may be predefined and pre-stored in the memory (for example, the memory 120 in FIG. 1). First touch information is corresponding to the graffiti behavior, and second touch information is corresponding to the function selection behavior. When obtained touch information about a first touch action matches the first touch information, an operation behavior corresponding to the first touch information is recognized as a graffiti behavior by looking up the correspondence between touch information and an operation behavior that is stored in the memory. Then, it is considered that the touch information about the first touch action is corresponding to the graffiti behavior. When obtained touch information about a second touch action matches the second touch information, an operation behavior corresponding to the second touch information is recognized as a function selection behavior by looking up the correspondence between touch information and an operation behavior that is stored in the memory. Then, it is considered that the touch information about the second touch action is corresponding to the function selection behavior.

In one implementation, the touch information includes: a grid capacitance value on the touch-sensitive surface that is generated by the touch action that acts on the touch-sensitive surface, a quantity of grids with a non-zero capacitance value, and an acceleration signal in a Z-axis direction. When the grid capacitance value on the touch-sensitive surface that is generated by the touch action that acts on the touch-sensitive surface meets a first preset capacitance value range, the quantity of grids with a non-zero capacitance value is less than a preset value, and the acceleration signal in the Z-axis direction falls within a first preset acceleration range, the touch information about the touch action is recognized as the first touch information. When the grid capacitance value on the touch-sensitive surface that is generated by the touch action that acts on the touch-sensitive surface meets a second preset capacitance value range, the quantity of grids with a non-zero capacitance value is greater than a preset value, and the acceleration signal in the Z-axis direction falls within a second preset acceleration range, the touch information about the touch action is recognized as the second touch information.

For example, a correspondence between the first touch information and a graffiti behavior and a correspondence between the second touch information and a function selection behavior are predefined, and a correspondence between touch information and an operation behavior is stored in the memory (for example, the memory 120 in FIG. 1). When touch information about a touch action that acts on the touch-sensitive surface matches the first touch information, an operation behavior corresponding to the first touch information is recognized as a graffiti behavior by looking up the correspondence between touch information and an operation behavior that is stored in the memory. When touch information about a touch action that acts on the touch-sensitive surface matches the second touch information, an operation behavior corresponding to the second touch information is recognized as a function selection behavior by looking up the correspondence between touch information and an operation behavior that is stored in the memory.

Optionally, when the touch action is recognized as a joint touch action or a finger touch action according to the touch information, an operation behavior is recognized by further looking up a correspondence between a touch action and an operation behavior that is stored in the memory. For example, a correspondence between a joint touch action and a graffiti behavior and a correspondence between a finger touch action and a function selection behavior are predefined, and a correspondence between touch information and an operation behavior is stored in the memory. When a joint touch action that acts on the touch-sensitive surface is obtained, an operation behavior corresponding to the joint touch action is recognized as a graffiti behavior by looking up the correspondence between touch action and an operation behavior that is stored in the memory. When a finger touch action that acts on the touch-sensitive surface is obtained, an operation behavior corresponding to the finger touch action is recognized as a function selection behavior by looking up the correspondence between touch action and an operation behavior that is stored in the memory.

For example, when the grid capacitance value on the touch-sensitive surface that is generated by the touch action that acts on the touch-sensitive surface meets a first preset capacitance value range, the quantity of grids with a non-zero capacitance value is less than a preset value, and the acceleration signal in the Z-axis direction falls within a first preset acceleration range, the touch action is recognized as a joint touch action. For example, the first preset capacitance value range may be less than or equal to 0.42 pF, the preset value may be 7, and the first preset acceleration range may be greater than 3g, where g is a gravity acceleration. When the grid capacitance value on the touch-sensitive surface that is generated by the touch action that acts on the touch-sensitive surface is less than or equal to 0.42 pF, the quantity of grids with a non-zero capacitance value is less than 7, and the acceleration signal in the Z-axis direction is greater than 3g, the touch action may be recognized as a joint touch action. It should be noted that the joint touch action in the embodiments of the present invention is not necessarily triggered by a joint, and may be triggered by a user by stroking the display that has a surface-sensitive surface very fast with another object. Any action that meets the foregoing determining criterion may be referred to as a joint touch action. The correspondence between a joint touch action and a graffiti behavior is predefined, and the correspondence between touch information and an operation behavior is stored in the memory (for example, the memory 120 in FIG. 1). When obtained touch information about the touch action that acts on the touch-sensitive surface matches the joint touch action, an operation behavior corresponding to the joint touch action is recognized as a graffiti behavior by looking up the correspondence between touch information and an operation behavior that is stored in the memory.

For example, when the grid capacitance value on the touch-sensitive surface that is generated by the touch action that acts on the touch-sensitive surface meets a second preset capacitance value range, the quantity of grids with a non-zero capacitance value is greater than a preset value, and the acceleration signal in the Z-axis direction falls within a second preset acceleration range, the touch action is recognized as a finger touch action. For example, when the grid capacitance value on the touch-sensitive surface that is generated by the touch action that acts on the touch-sensitive surface is greater than 0.42 pF, the quantity of grids with a non-zero capacitance value is greater than 7, and the acceleration signal in the Z-axis direction is less than 3g, the touch action may be recognized as a finger touch action. A correspondence between a finger touch action and a function selection behavior is predefined, and the correspondence between touch information and an operation behavior is stored in the memory. When obtained touch information about the touch action that acts on the touch-sensitive surface matches the finger touch action, an operation behavior corresponding to the finger touch action is recognized as a function selection behavior by looking up the correspondence between touch information and an operation behavior that is stored in the memory.

It should be noted that, determining whether the acceleration signal in the Z-axis direction falls within the first preset acceleration range may be implemented by determining whether the acceleration signal in the Z-axis direction is within the first preset acceleration range in a preset time (for example, 5 ms).

S303: Execute the operation behavior, and display a user interface for the operation behavior on the display.

For example, the operation behavior is executed according to the recognized user operation behavior. The portable electronic device displays the user interface for the operation behavior on the display. For example, when the operation behavior is recognized as a graffiti behavior, the graffiti behavior is executed, and the user interface for the graffiti behavior is displayed. Alternatively, when the operation behavior is recognized as a function selection behavior, the function selection behavior is executed, and the user interface for the function selection behavior is displayed.

Optionally, that when the operation behavior is recognized as a graffiti behavior, the graffiti behavior is executed, and the user interface for the graffiti behavior is displayed on the display may be: A multimedia application interface is displayed, and a graffiti track of the graffiti behavior in the multimedia application interface is displayed simultaneously. The track may be a line segment, a circle, a text, or the like. A color and a thickness of the track may be preset in the electronic device. For example, the color of the track may be set as blue, and the thickness of the tracks is set as 3 pt (Point, pt for short). Then, when a user draws graffiti according to an actual requirement, a track in the color of blue and the thickness of 3 pt is displayed. If the operation behavior is recognized as a second operation behavior according to the touch information, for example, when the second operation behavior is a function selection behavior, the function selection behavior is executed, and a user interface triggered by a corresponding function is displayed on the display according to a location at which the user performs the touch operation.

The following will provide descriptions by using an example in which the display operation method provided in this embodiment of the present invention is applied to a scenario in which a user performs video recording by using a portable electronic device. For example, after the user enables a video recording function of the portable electronic device, a user interface displayed on the display is a video recording interface. During the video recording, when a touch action that acts on a touch-sensitive surface is obtained, touch information about the touch action is obtained, and the touch action is further recognized as a joint touch action. According to a correspondence between touch information and an operation behavior that is stored in the memory, an operation behavior corresponding to the joint touch action is a graffiti behavior, the graffiti behavior is executed, and a graffiti interface is displayed on the display. The graffiti interface may display a motion track of the touch action that acts on the display interface, and the track may be circling a recorded object, or annotating or describing a user interface in texts.

When the first operation behavior is executed, and the user interface for the first operation behavior is displayed, for example, for a graffiti behavior, luminance of the display needs to be adjusted due to an ambient luminance change, the user may use a finger to touch the display, and touch a function button for adjusting luminance on the display to adjust the luminance. The portable electronic device obtains touch information about the touch action that acts on the touch-sensitive surface, recognizes the touch action of touching the display as a finger touch action, and recognizes, according to the correspondence between a touch action and an operation behavior that is pre-stored in the memory, an operation behavior corresponding to the finger touch action as a second operation behavior. For example, for a function selection behavior, the portable electronic device executes, according to a touch location, a luminance adjusting function of the function selection behavior, and displays a user interface for adjusting the luminance on the touchscreen. It should be noted that a graffiti operation of the user and a function selection operation of the user may be performed simultaneously. For example, when adjusting the luminance by a finger touch, the user executes a graffiti behavior by a joint touch.

The display operation method provided in this embodiment of the present invention may be applied to a portable electronic device, and the portable electronic device includes a display that has a touch-sensitive surface. When the user interface displayed on the display is a multimedia application interface, a touch action that acts on the touch-sensitive surface is obtained, and touch information about the touch action is obtained; an operation behavior is recognized according to the touch information; and the operation behavior is executed, and a user interface for the operation behavior is displayed on the display. The multimedia application interface may be an application interface that displays video recording, video playing, a web page, a blog, a text, and so on. In this way, user operation steps are simplified, and man-machine interaction experience is improved. Further, an operation behavior of a user, for example, a graffiti behavior or a function selection behavior, can be recognized according to touch information about the touch action of the user, and then the operation behavior is executed. When the graffiti behavior is performed, the function selection behavior may be recognized according to the touch information; when the function selection behavior is performed, the graffiti behavior may be recognized according to the touch information. The corresponding operation behavior is executed, and a user interface for the operation behavior is displayed. In this way, user operation steps are simplified, and man-machine interaction experience is further improved.

FIG. 4 is a simplified schematic diagram of an internal structure of a portable electronic device according to another embodiment of the present invention. As shown in FIG. 4, the portable electronic device provided in this embodiment of the present invention includes:
a display 401 that has a touch-sensitive surface; an acceleration sensor 402, configured to obtain an acceleration in a Z-axis direction; a memory 403, configured to store an instruction; and a processor 404. The processor 404 invokes the instruction stored in the memory 403 to: when a user interface displayed on the display 401 is a multimedia application interface, obtain a touch action that acts on the touch-sensitive surface, and obtain touch information about the touch action; recognize an operation behavior according to the touch information; and execute the operation behavior, and display a user interface for the operation behavior on the display 401.

The touch information includes: a grid capacitance value on the touch-sensitive surface that is generated by the touch action that acts on the touch-sensitive surface, a quantity of grids with a non-zero capacitance value, and an acceleration signal in a Z-axis direction. The recognizing an operation behavior according to the touch information includes: when the grid capacitance value on the touch-sensitive surface that is generated by the touch action that acts on the touch-sensitive surface meets a first preset capacitance value range, the quantity of grids with a non-zero capacitance value is less than a preset value, and the acceleration signal in the Z-axis direction falls within a first preset acceleration range, recognizing the operation behavior as a first operation behavior.

Specifically, the portable electronic device provided in this embodiment of the present invention may be correspondingly configured to execute the technical solution of the method embodiment shown in FIG. 3. Implementation principles are similar to those of the method embodiment, and details are not described herein.

The portable electronic device provided in this embodiment of the present invention includes a display that has a touch-sensitive surface, an acceleration sensor configured to obtain an acceleration in a Z-axis direction, a memory configured to store an instruction, and a processor. The processor is configured to invoke the instruction stored in the memory to: when a user interface displayed on the display is a multimedia application interface, obtain a touch action that acts on the touch-sensitive surface, and obtain touch information about the touch action; recognize an operation behavior according to the touch information; and execute the operation behavior, and display a user interface for the operation behavior on the display. The multimedia application interface may be an application interface that displays video recording, video playing, a web page, a blog, a text, and so on, so that the portable electronic device can recognize the operation behavior according to the touch information, execute the operation behavior, and display a user interface for the operation behavior on the display. In this way, user operation steps are simplified, and man-machine interaction experience is improved.

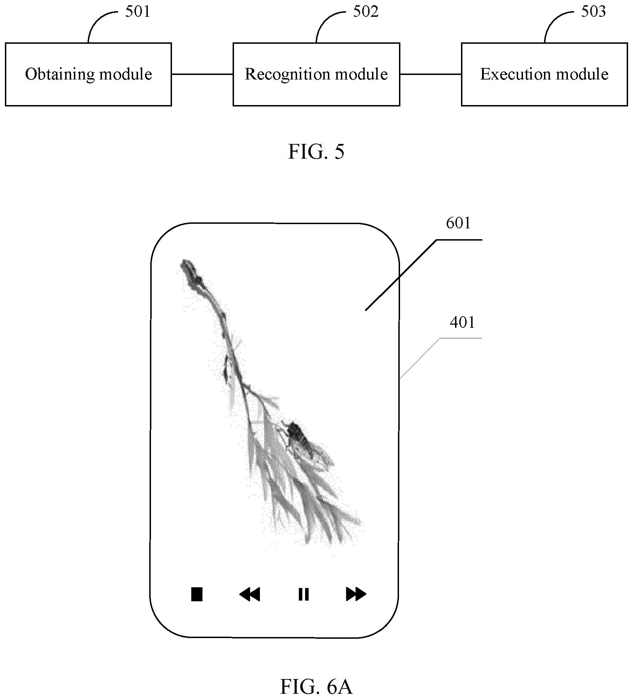

FIG. 5 is a schematic diagram of a function structure of a display operation apparatus according to an embodiment of the present invention. As shown in FIG. 5, the display operation apparatus provided in this embodiment of the present invention includes:
an obtaining module 501, configured to: when a user interface displayed on a display is a multimedia application interface, obtain a touch action that acts on a touch-sensitive surface, and obtain touch information about the touch action;
a recognition module 502, configured to recognize an operation behavior according to the touch information; and
an execution module 503, configured to: execute the operation behavior, and display a user interface for the operation behavior on the display.

The touch information includes: a grid capacitance value on the touch-sensitive surface that is generated by the touch action that acts on the touch-sensitive surface, a quantity of grids with a non-zero capacitance value, and an acceleration signal in a Z-axis direction.

The recognition module 502 is specifically configured to: when the grid capacitance value on the touch-sensitive surface that is generated by the touch action that acts on the touch-sensitive surface meets a first preset capacitance value range, the quantity of grids with a non-zero capacitance value is less than a preset value, and the acceleration signal in the Z-axis direction falls within a first preset acceleration range, recognize the operation behavior as a first operation behavior.

Specifically, the display operation apparatus provided in this embodiment of the present invention may be correspondingly configured to execute the technical solution of the method embodiment shown in FIG. 3. Implementation principles are similar to those of the method embodiment, and details are not described herein.

The display operation apparatus provided in this embodiment of the present invention may include an obtaining module, a recognition module, and an execution module. The obtaining module is configured to: when a user interface displayed on a display is a multimedia application interface, obtain a touch action that acts on a touch-sensitive surface, and obtain touch information about the touch action. The recognition module is configured to recognize an operation behavior according to the touch information. The execution module is configured to: execute the operation behavior, and display a user interface for the operation behavior on the display. The multimedia application interface may be an application interface that displays video recording, video playing, a web page, a blog, a text, and so on. The technical solutions provided in the embodiments of the present invention allow the display operation apparatus to recognize the operation behavior according to the touch information, execute the operation behavior, and display the user interface for the operation behavior on the display. In this way, user operation steps are simplified, and man-machine interaction experience is improved.

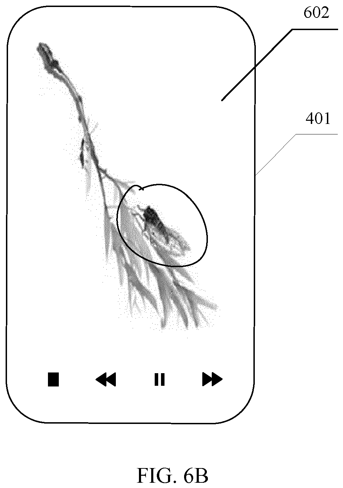

FIG. 6A is a schematic diagram of a user interface on a portable electronic device according to an embodiment of the present invention. FIG. 6B is a schematic diagram of another user interface on a portable electronic device according to an embodiment of the present invention. The portable electronic device includes a display, a memory, and a processor that is configured to execute an instruction in the memory, where the display has a touch-sensitive surface. As shown in FIG. 6A and FIG. 6B, the user interface on the portable electronic device provided in the embodiment of the present invention includes:
a user interface 601, used to display a multimedia application. When the user interface displayed on the display 401 is a multimedia application interface, a touch action that acts on the touch-sensitive surface is obtained, and touch information about the touch action is obtained; an operation behavior is recognized according to the touch information; and the operation behavior is executed, and a user interface 602 for the operation behavior is displayed on the display.

The touch information includes: a grid capacitance value on the touch-sensitive surface that is generated by the touch action that acts on the touch-sensitive surface, a quantity of grids with a non-zero capacitance value, and an acceleration signal in a Z-axis direction. When the grid capacitance value on the touch-sensitive surface that is generated by the touch action that acts on the touch-sensitive surface meets a first preset capacitance value range, the quantity of grids with a non-zero capacitance value is less than a preset value, and the acceleration signal in the Z-axis direction falls within a first preset acceleration range, the operation behavior is recognized as a first operation behavior. The first operation behavior herein may be a graffiti behavior. The user interface 602 for displaying the operation behavior on the display may be a user interface for the graffiti behavior.

In this embodiment of the present invention, for example, when a behavior of a cicada on a willow is being recorded, a scenario of the cicada resting on the willow is displayed in the user interface 601 that is used to display a multimedia application. When a user wants a video viewer to focus on the cicada in this scenario, the user may draw graffiti on video frames, that is, circling the cicada. In this embodiment of the present invention, the user may use the joint to touch the display 401. The portable electronic device recognizes an operation behavior according to touch information, that is, in this embodiment of the present invention, may recognize the operation behavior as a graffiti behavior, then executes the graffiti behavior, and displays, on the display, the user interface 602 for the graffiti behavior of circling the cicada.

Specifically, the user interface on the portable electronic device provided in this embodiment of the present invention may be correspondingly used to execute the technical solution of the method embodiment shown in FIG. 3. Implementation principles are similar to those of the method embodiment, and details are not described herein.

The user interface on the portable electronic device provided in this embodiment of the present invention includes a user interface that is used to display a multimedia application. When the user interface displayed on a display is a multimedia application interface, a touch action that acts on a touch-sensitive surface is obtained, and touch information about the touch action is obtained; an operation behavior is recognized according to the touch information; and the operation behavior is executed, and a user interface for the operation behavior is displayed on the display. In this way, user operation steps are simplified, and man-machine interaction experience is improved.

An embodiment of the present invention further provides a non-volatile computer-readable storage medium for storing one or more programs. The one or more programs include an instruction. When the instruction is executed by a portable electronic device including a display that has a touch-sensitive surface, the portable electronic device is enabled to execute the following events:
when a user interface displayed on the display is a multimedia application interface, obtaining a touch action that acts on the touch-sensitive surface, and obtaining touch information about the touch action; recognizing an operation behavior according to the touch information; and executing the operation behavior, and displaying a user interface for the operation behavior on the display.

The non-volatile computer-readable storage medium for storing one or more programs provided in this embodiment of the present invention may be correspondingly used to execute the technical solution of the method embodiment shown in FIG. 3. Implementation principles and technical effects are similar to those of the method embodiment, and details are not described herein.

A person of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A display operation method, wherein the method is applied to a portable electronic device, the electronic device comprises a display that has a touch-sensitive surface, and the method comprises:
when a user interface displayed on the display is a multimedia application interface, obtaining a touch action that acts on the touch-sensitive surface, and obtaining touch information about the touch action;
recognizing an operation behavior according to the touch information; and
executing the operation behavior, and displaying a user interface for the operation behavior on the display.

2. The method according to claim 1, wherein the touch information comprises: a grid capacitance value on the touch-sensitive surface that is generated by the touch action that acts on the touch-sensitive surface, a quantity of grids with a non-zero capacitance value, and an acceleration signal in a Z-axis direction.

3. The method according to claim 2, wherein the recognizing an operation behavior according to the touch information comprises:
recognizing the operation behavior as a first operation behavior when the grid capacitance value on the touch-sensitive surface that is generated by the touch action that acts on the touch-sensitive surface meets a first preset capacitance value range, the quantity of grids with a non-zero capacitance value is less than a preset value, and the acceleration signal in the Z-axis direction falls within a first preset acceleration range.

4. A portable electronic device, comprising:
a display, wherein the display has a touch-sensitive surface;
an acceleration sensor, configured to obtain an acceleration in a Z-axis direction;
a memory, configured to store an instruction; and
a processor, wherein the processor invokes the instruction stored in the memory to:
when a user interface displayed on the display is a multimedia application interface, obtain a touch action that acts on the touch-sensitive surface, and obtain touch information about the touch action;
recognize an operation behavior according to the touch information; and
execute the operation behavior, and display a user interface for the operation behavior on the display.

5. The portable electronic device according to claim 4, wherein the touch information comprises: a grid capacitance value on the touch-sensitive surface that is generated by the touch action that acts on the touch-sensitive surface, a quantity of grids with a non-zero capacitance value, and an acceleration signal in the Z-axis direction.

6. The portable electronic device according to claim 5, wherein the recognizing an operation behavior according to the touch information comprises:
recognizing the operation behavior as a first operation behavior when the grid capacitance value on the touch-sensitive surface that is generated by the touch action that acts on the touch-sensitive surface meets a first preset capacitance value range, the quantity of grids with a non-zero capacitance value is less than a preset value, and the acceleration signal in the Z-axis direction falls within a first preset acceleration range.

7. A display operation apparatus, wherein the apparatus comprises:
an obtaining module, configured to: when a user interface displayed on a display is a multimedia application interface, obtain a touch action that acts on a touch-sensitive surface of the display, and obtain touch information about the touch action;
a recognition module, configured to recognize an operation behavior according to the touch information; and
an execution module, configured to: execute the operation behavior, and display a user interface for the operation behavior on the display.

8. The apparatus according to claim 7, wherein the touch information comprises: a grid capacitance value on the touch-sensitive surface that is generated by the touch action that acts on the touch-sensitive surface, a quantity of grids with a non-zero capacitance value, and an acceleration signal in a Z-axis direction.

9. The apparatus according to claim 8, wherein the recognition module is specifically configured to:
recognize the operation behavior as a first operation behavior when the grid capacitance value on the touch-sensitive surface that is generated by the touch action that acts on the touch-sensitive surface meets a first preset capacitance value range, the quantity of grids with a non-zero capacitance value is less than a preset value, and the acceleration signal in the Z-axis direction falls within a first preset acceleration range.

10. A user interface on a portable electronic device, wherein the portable electronic device comprises a display, a memory, and a processor configured to execute an instruction stored in the memory, the display has a touch-sensitive surface, and the user interface comprises:
a user interface, used to display a multimedia application, wherein
when the user interface displayed on the display is a multimedia application interface, a touch action that acts on the touch-sensitive surface is obtained, and touch information about the touch action is obtained; an operation behavior is recognized according to the touch information; and the operation behavior is executed, and a user interface for the operation behavior is displayed on the display.

11. A non-volatile computer-readable storage medium for storing one or more programs, wherein the one or more programs comprises an instruction, and when the instruction is executed by a portable electronic device comprising a display that has a touch-sensitive surface, the portable electronic device is enabled to execute the following events:
when a user interface displayed on the display is a multimedia application interface, obtaining a touch action that acts on the touch-sensitive surface, and obtaining touch information about the touch action; recognizing an operation behavior according to the touch information; and executing the operation behavior, and displaying a user interface for the operation behavior on the display.
